# EUROPEAN PATENT SPECIFICATION

(11) **EP 2 378 168 B1**
(45) Date of publication and mention of the grant of the patent: **16.04.2014**
(21) Application number: 11162974.7
(22) Date of filing: 19.04.2011
(51) Int. Cl.: F16J 15/00, F16J 15/54, B01F 7/04

(54) **Clean-in-place seal assembly**
Reinigung-vor-Ort-Dichtungsanordnung
Ensemble formant joint à nettoyage sur place

(30) Priority: 19.04.2010 US 325612 P; 18.04.2011 US 201113089009
(43) Date of publication of application: 19.10.2011
(73) Proprietor: Cheese Systems, Inc., Marshfield WI 54449 (US)
(72) Inventor: Isenberg, Timothy J., Marshfield, WI Wisconsin 54449 (US); Zirbel, John E., Marshfield, WI Wisconsin 54449 (US)
(74) Representative: Hedges, Martin Nicholas

(56) References cited:
- DE-A1- 3 524 947
- DE-A1- 19 904 761
- US-A- 4 861 044
- US-A1- 2008 131 313
- US-A1- 2009 127 798

## Description

The invention relates to food processing equipment and, more particularly, to seals for shafts of rotating components within food processing equipment.

Seals are known for sealing openings through which shafts of rotating components extend through walls of food processing equipment.

Clean-in-place systems for use with food processing equipment are also known in the food processing industries. Typically, such clean-in-place systems automatically spray cleaning fluid inside of food processing equipment.

The inventors have recognized that in typical food processing equipment such as vats and other food processing machines, prior art clean-in-place systems have been primarily designed to clean the inside walls of the vat or machine and large mechanical components that are housed in it, such as agitator or mixing devices, while other parts of the overall system have not been cleaned with these known clean-in-place systems. The inventors have also recognized that in typical food processing vats and other food processing machines, shaft seals for shafts of rotating assemblies must be manually cleaned by technicians and, at times, are unable to be cleaned at the interfaces of the seals and the rotating components. The present invention contemplates a shaft seal that addresses these and other inventor identified problems and drawbacks of the prior art.

US4861044 discloses a shaft seal that is seated snugly into a tapered aperture of a vat wall. The seal has an inner lip, an outer lip, and a single cleaning port that extends from an end face of the seal into an annular channel that delivers cleaning fluid between the inner and outer lips of the seal.

DE3524947 discloses a space located between the seal and a shaft into which a cleaning fluid can be delivered through a single opening.

US2008/131313, upon which the pre-characterising portion of claim 1 is based, discloses a pair of seals provided at opposing ends of a seal holder and a chamber defined between the seal holder and the shaft. The single fluid conduit channel extends from an end face of the seal holder to the chamber for introducing cleaning solution into the chamber.

In accordance with the present invention, there is provided a seal assembly for use with a clean-in-place system comprising: a seal that fits concentrically around and engages a shaft; a seal cover that concentrically surrounds the seal and the shaft so that a cavity is defined between the seal cover and the shaft, the seal cover including a fluid passage for introducing cleaning fluid into the cavity; characterized by a hub collar that is arranged in the cavity and that includes a side wall with an inner surface that faces toward and is radially spaced from the shaft and an opposing outer surface that faces away from the shaft and is radially spaced from the seal cover, the side wall of the hub collar including multiple bores that extend through the inner and outer surfaces thereof, each of the multiple bores extending angularly through the side wall of the hub collar for directing the cleaning fluid angularly toward the shaft so as to establish a fluid flow path within the cavity in which the cleaning fluid flows circumferentially around the shaft.

Preferably, the cavity is adjacent the seal so that the cleaning fluid introduced into the cavity can disengage the seal from an outer circumferential surface of the shaft. This may allow the cleaning fluid to flow past the seal and purge the cavity with the cleaning fluid so as to clean the seal assembly in place.

In accordance with another aspect of the present invention, there is provided a food processing machine having a wall with a seal assembly mounted thereto and positioned so cleaning fluid that flows past the seal of the seal assembly for purging the cavity flows into the food processing machine.The food processing machine may be a cheese vat or a non-enclosed or other food processing machine. The cleaning fluid that flows circumferentially around the shaft can flow out of the seal assembly and into the food processing machine, which collects the cleaning fluid after it purges the cavity and which may therefore allow the seal assembly to be cleaned in place.

Preferably, a cleaning fluid supply line delivers the cleaning fluid to the fluid passage of the seal cover. The seal assembly may be mounted to the wall of the food processing machine so that a connection between the cleaning fluid supply line and an inlet of the fluid passage is provided outside of the food processing machine. This may enhance serviceability of the seal assembly by providing connections outside of the vat.

In one embodiment, the seal assembly may fluidly connect to a port that extends through a wall of the food processing machine. The seal assembly may include a back plate that is mounted to the wall of the food processing machine. The back plate has a bore that opens into the port of the wall of the food processing machine, and the seal cover is connected to the back plate. This may allow the cleaning fluid to collect in the food processing machine and allow the seal assembly to be cleaned in place.

First and second seals may be housed within the seal cover. The first and second seals may be longitudinally spaced from each other and be positioned on opposing sides of the cavity. The cleaning fluid that flows through the cavity can flow past the first seal, but not the second seal. This may allow the seal assembly to remain sealed at one end while purging the cavity with cleaning fluid that flows out of the other end so as to clean the seal assembly, in place.

The seal may include a lip that resiliently engages the shaft so that cleaning fluid that is introduced into the cavity can force the lip to disengage from the shaft and allow the cleaning fluid to flow past the seal. This may allow the cleaning fluid to flow out of an end of the seal assembly and allow the seal assembly to be cleaned in place.

In order that the invention may be well understood, there will now be described an embodiment thereof, given by way of example, reference being made to the accompanying drawings, in which:
FIG. 1 is an isometric view from above and in front of a vat system incorporating a clean-in-place seal assembly in accordance with the present invention;
FIG. 2 is an isometric view from above and in back of the vat system of FIG. 1;
FIG. 3 is a sectional view of the vat system of FIG. 1;
FIG. 4 is a close up sectional view of a seal assembly of FIG. 3, taken at the curved line 4--4 of FIG. 3;
FIG. 5 is a partial top plan view of the seal assembly and other components of the vat system of FIG. 1;
FIG. 6 is a sectional view of the seal assembly and other components of the vat system of FIG. 1;
FIG. 7 is an exploded sectional view of the seal assembly of FIG. 4; and
FIG. 8 is a sectional view of a hub collar of the seal assembly of FIG. 4;
FIG. 9 is a side elevation of the hub collar of FIG. 4; and
FIG. 10 is a sectional view of the hub collar of FIG. 9, taken at the line 10--10 of FIG. 9.

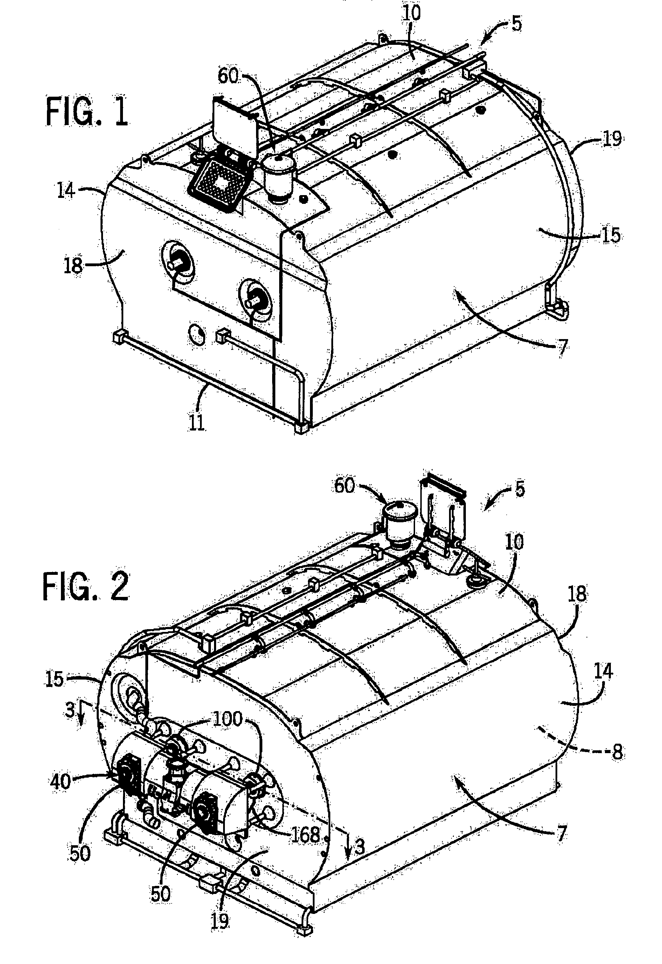

FIG. 1 illustrates a clean-in-place seal assembly 100 being implemented within a vat system 5. Vat system 5 can be used for processing food and related products. The clean-in-place seal assembly 100 is described as being used in the vat system 5 to simplify its explanation, while noting that the clean-in-place seal assembly 100 in other embodiments may be implemented in various non-enclosed or other food processing machines, and/or other suitable machines having bushing-supported rotating components.

Referring now to FIGS. 1 and 2, vat system 5 can be used for processing the food and related products (collectively referred to as "vat contents") by mechanically manipulating and heating or cooling the vat contents, depending on the particular food or related product being processed. In a representative application, the vat system 5 may be used in the production of cheese, although it is understood that the vat system 5 may be used in processing other types of food products. The system 5 includes a vat 7 that has an agitation system 40 which performs the mechanical manipulations tasks by using a motor that delivers power to a pair of drives 50 (FIG. 2) to rotate a pair of shafts 45 upon which blade assemblies are mounted, and a zoned heat transfer system to perform such heating and/or cooling to provide zoned temperature control to the vat 7.

Vat 7 defines an enclosure having a top wall 10, a bottom wall 11, and side walls 14, 15, all of which extend longitudinally between a pair of end walls 18 and 19. The walls 10, 11, 14, 15, 18, 19 are multilayered, having an outer jacket 20 and an inner shell 25 that are spaced from each other. Insulation and various components of the zoned heat transfer system are housed between the jacket 20 and shell 25. The shell 25 is the inmost structure of the vat 7, so that its inner surface surrounds and defines an outer periphery of a void or inside space 8 within the vat 7. A lower part of the inside space 8 resembles two horizontal parallel cylinders that transversely intersect each other, being defined by a lower portion of the shell 25 that has a pair of arcuate depressions which extend along the length of the vat 7, on opposing sides of a longitudinally extending raised middle segment. From the lower portion of the shell 25, opposing side portions extend in an outwardly bowed manner, arching away from each other in a transverse direction of the vat 7. An upper portion of the shell 25 arcs gradually between side portions of the shell 25 and defines an upper perimeter of the inside space 8 of vat 7.

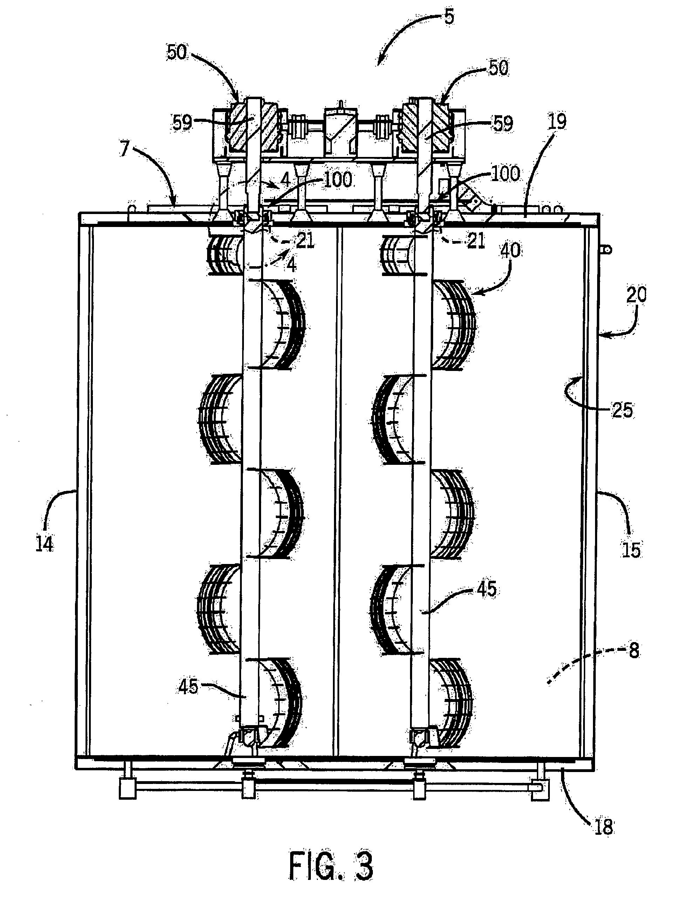

Referring now to FIGS. 3-6, clean-in-place seal assembly 100 includes a back plate 110, a seal cover 150, a hub collar 200, and a pair of seals 250 that engage the shaft 45. The seal cover 150 is connected to the back plate 110, and a cavity 90 is defined between the back plate 110, cover 150, and shaft 45. The hub collar 200 and seals 250 are housed within the seal assembly 100, with the seals 250 at opposing ends of the cavity 90. The shafts 45, back plates 110, seal covers 150, hub collars 200, and seals 250 cooperate to allow their respective interfacing surfaces to be cleaned in place and without requiring manual cleaning by a technician.

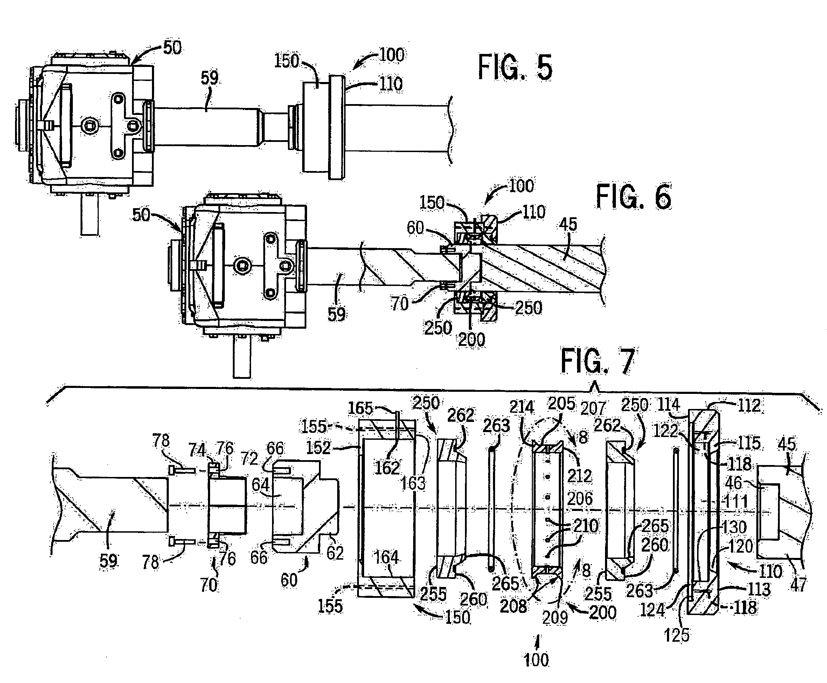

Referring now to FIGS. 6 and 7, a portion of an end of each of the shafts 45 that is closest to the drives 50 (FIGS. 3, 5, and 6) is housed in the seal assembly 100. The shaft 45 includes a main body and an adapter 60 that, in this embodiment, extends outwardly from the seal assembly 100 toward the drive 50. The adapter 60 has a reduced diameter portion 62 that inserts into a bore 46 that extends into an end of the main body of the shaft 45. A coupler 70 has a neck 72 that inserts into a bore 64 at a drive-facing end of the adapter 60 of shaft 45. The coupler70 has a flange 74 with longitudinally extending through-bores 76 that are spaced from each other about the perimeter of coupler flange 74. Fasteners 78 extend through the through-bores 76 of the coupler flange 74 and into cooperating bores 66 that extend into the drive-facing end of the adapter 60. One end of a stub shaft 59 inserts into coinciding bores of the adapter 46 and coupler 47. A second end of stub shaft 59 extends into and is rotated by the drive 50. Rotation of the stub shaft 59 is transmitted through the adapter 46 and coupler 47 and to the shaft 45 within the seal assembly 100, rotating the shaft 45.

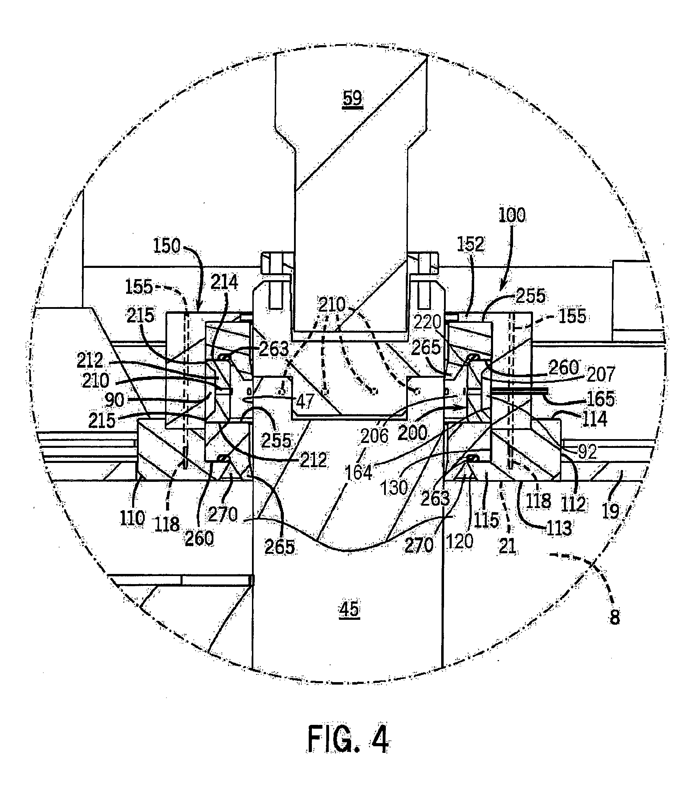

Referring now to FIG. 4, the back plate 110 is attached to the wall 19 and has a bore 111 (FIG. 7) that aligns with a port 21 that extends through the wall 19. The back plate 110 is secured to the wall 19 such as by welding, with the weld extending along the entire perimeter of the back plate 110 so as to establish a liquid-tight connection between the back plate 110 and the vat 7.

Referring now to FIGS. 4 and 7, the back plate 110 includes a side wall 112 that extends between a vat-facing end 113 and a drive-facing end 114 of the back plate 110. The vat-facing end 113 of the back plate 110 includes a flange 115 that extends radially inwardly from the side wall 112 toward a longitudinal axis of the seal assembly 100. The flange 115 has a chamfered inner circumferential surface 120 that tapers outwardly toward the vat wall 19.

Still referring to FIGS. 4 and 7, multiple spaced-apart threaded blind bores 118 extend axially into the drive-facing end 114 end of the back plate 110. A pair of counterbores 122, 124 extends into the drive-facing end 114 of the back plate 110 which provides a stepped inner circumferential surface to the side wall 112. The smaller diameter counterbore 122 extends longitudinally more than halfway through the axial thickness of the back plate 110 and has an inside diameter that corresponds to an outside diameter of the seal 250. The larger diameter counterbore 124 extends slightly below the surface of the drive-facing end 114 and has an inside diameter that corresponds to an outside diameter of the seal cover 150.

Still referring to FIGS. 4 and 7, seal cover 150 serves as a cap for the seal assembly 100 and is seated against the back plate 110. Seal cover 150 includes an end wall 152 and a circumferential side wall 160 that extends longitudinally from a perimeter of the end wall 152. A fluid passage 162 (FIG. 7) extends through the side wall 160 for delivering cleaning fluid into the cavity 90. In the embodiment of FIG. 7, an inlet 165 opens into the fluid passage 162. Shown best in FIG. 2, a cleaning fluid supply line 168 delivers cleaning fluid to the inlet 165 and thus into the fluid passage 162 that directs the fluid to the cavity 90. The cleaning fluid supply line 168 is connected to a known clean-in-place system (including suitable plumbing components, hardware components, and controls) that is configured to deliver cleaning fluid for automatically spraying down predetermined surfaces within the vat system 5. During use of the clean-in-place system, cleaning fluid is conveyed through the cleaning fluid supply line 168 for delivery to the cavity 90 where it washes exposed, surfaces of the shaft(s) 45, back plate(s) 110, seal cover(s) 150, hub collar(s) 200, and seals 250.

Still referring to FIGS. 4 and 7, multiple through-bores 155 that are spaced apart from each other about the perimeter of the end wall 152 of seal cover 150 extend longitudinally through the end wall 152 and the side wall 160. The through-bores 155 align with the blind bores 118 of the back plate 110, and fasteners extend through the through-bores 155 and secure into the blind bores 118 to hold the seal cover 150 against the back plate 110. The seal cover 150 is held against the back plate 110, with an end surface 163 of the circumferential side wall 160 abutting a shoulder 125 at the bottom of the larger diameter counterbore 124 of the back plate 110.

Referring again to FIG. 4, the inner surface 164 of the seal cover circumferential side wall 160 and the inner surface 130 of the portion of the back plate side wall 112 that extends around the smaller diameter counterbore 122 align with each other, with such two surfaces being radially spaced the same distance from a longitudinal axis of the seal assembly 100. This gives the cavity 90 a width that is substantially constant along its length. The constant width of the cavity 90 allows the hub collar 200 and seals 250 to have the same outside diameters and fit against respective portions of the inner surfaces of the back plate 110 and seal cover side walls 112, 160.

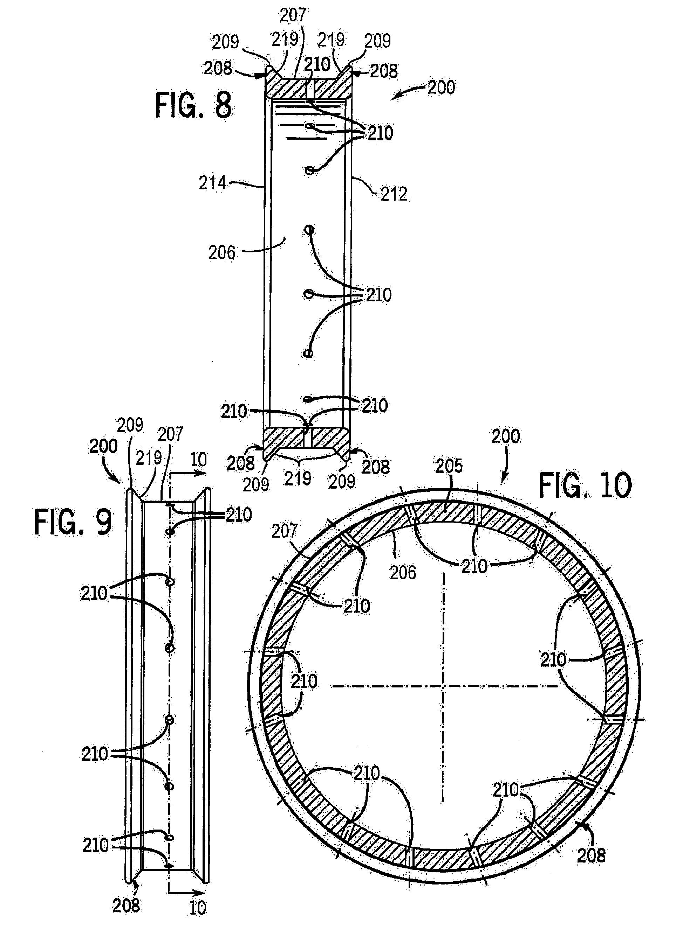

Referring still to FIG. 4, hub collar 200 includes a side wall 205 that has an inner surface 206 which is spaced radially outwardly from an outer surface 46 of the shaft 45. Shown best in FIGS. 8-10, an outer surface 207 of the sidewall 205 is spaced radially inwardly from the inner surface 164 of the seal cover side wall 160. A pair of rims 208 extends from the ends of the hub collar side wall 205 radially outwardly from the outer surface of the side wall 205. Outer surfaces 209 of the rims 208 engage the hub collar side wall 205 (FIG. 4). From the outer surfaces 209, the rims 205 have ramped surfaces 219 that slant angularly toward a middle of the hub collar side wall 205.

Referring now to FIGS. 4, 7, and 8-10, in this embodiment, flow directing guides of the hub collar 200 are defined by bores 210 that extend through the side wall 205. The bores 210 are aligned with and spaced from each other about the periphery of the side wall 205. In accordance with the invention, each bore 210 extends in a direction that is angular or somewhat tangential with respect to the outer and inner surfaces 207, 206 of the side wall 205. In this configuration, instead of directly colliding with the shaft 45, cleaning fluid that is delivered through the bores 210 substantially maintains its delivery velocity and creates a fluid rotation about the shaft 45 in which the cleaning fluid flows circumferentially around the shaft 45. Front and back ends 212, 214 of the hub collar 200 have flat surfaces that abut the seals 250, maintaining a space 92 between the seals 250 within the cavity 90.

Referring again to FIGS. 4 and 7, each seal 250 has annular back and front end walls 255, 260 and a lip 265 that extends longitudinally from the front end wall 260. In this embodiment, a groove 262 extends into the front end wall 260 and in which an o-ring 263 is installed. Shown best in FIG. 4, the seal 250 that is closest to the vat wall 19 has its (i) front end wall 260 abutting a drive-facing surface of the flange 115 of the back plate side wall 112, with the o-ring 263 compressed between the seal front end wall 260 and flange 115, and (ii) back end wall 255 abutting the front end 212 of the hub collar 200. Also shown best in FIG. 4, the seal 250 that is closest to the drive 50 has its (i) front end wall 260 abutting the back end 214 of the hub collar 200, with the o-ring 263 compressed between the seal front end wall 260 and the flat surface of the hub collar back end 214, and (ii) back end wall 255 abutting an inner surface of the end wall 152 of the seal cover 150. With this construction, the lips 265 of both of the seals 250 face the same direction toward the vat wall 19.

Still referring to FIGS. 4 and 7, each lip 265 resiliently engages the shaft 45 and extends angularly inward from the front end wall 260 so that an innermost edge of the lip 265 defines a smallest inside diameter of the seal 250. The lip 265 reduces its cross-sectional width along its length, with the thickest portion of the lip 265 defined at the intersection of the lip 265 and the front end wall 260 and the thinnest portion of the lip 265 being defined at the front end of the lip 265.

Referring again to FIG. 4, the lip 265 of the seal 250 that is closest to the drive 50 extends under the side wall 205 of the hub collar 200. In this embodiment, a corner 220 of the hub collar 200 defined between the back end 214 and inner surface of the hub collar side wall 205 nests into a corner of the seal 250 defined between the front end wall 260 and lip 265. The lip 265 of the seal 250 that is closest to the vat wall 19 extends through the flange 115 of the back plate 110. The lip 265 of the seal 250 and the chamfered surface 120 of the flange 115 of the back plate 110 extend angularly in diverging directions, defining a clearance 270 between such surfaces and that is triangular in cross-section. Clearance 270 provides enough space to allow the lip 265 to flex out and radially expand when cleaning fluid is being forced into the cavity 90 of the seal assembly 100. This allows cleaning fluid to flow past the front seal 250 nearest the vat wall 19 and purge the cavity 90 with the cleaning fluid so that the cleaning fluid flows into the vat.

Still referring to FIG. 4, in light of the above, when the seal assembly 100 is being cleaned in place, cleaning fluid supply line 168 delivers cleaning fluid to the inlet 165 and thus into the fluid passage 162 that directs the fluid to the cavity 90. The cleaning fluid flows through the bores 210 of the hub collar 200 and flows rotationally through the cavity 90, circumferentially around the shaft 45. As more cleaning fluid flows into the cavity 90, it continues to flow around the shaft 45 and builds pressure within the cavity 90. When pressure builds within the cavity 90, the lip 265 of the seal 250 nearest the drive 50 increases its clamping force against the shaft 45 because the pressurized cleaning fluid within the cavity 90 acts on the outer surface of and tends to radially compress the lip 265 of the rear seal 250. This increases the sealing force that the lip 265 applies against the shaft 45 as a function of the pressure increase within the cavity 90, which prevents the cleaning fluid from flowing out of the seal assembly 100 toward the drive.

Still referring to FIG. 4, at the other end of the seal assembly 100, the seal 250 nearest the vat wall 19 reacts to the pressure increase in the cavity 90 in generally the opposite way as that described above with respect to the seal 250 nearest the drive 50. The lip 265 of the seal 150 nearest the vat wall 19 decreases its clamping force against the shaft 45 because the pressurized cleaning fluid within the cavity 90 acts on the inner surface of and tends to radially expand the lip 265. This flexes the lip 265 outwardly into the clearance 270, allowing cleaning fluid to flow out of the seal assembly 100 and into the vat 7 after the cleaning fluid has washed the respective surfaces of the shaft 45, back plate 110, seal cover 150, hub collars 200, and seals 250, within the seal assembly 100, so that the seal assembly 100 is flushed or purged with the cleaning fluid.

## Claims

1. A seal assembly (100) for use with a clean-in-place system comprising:
a seal (250) that fits concentrically around and engages a shaft (45);
a seal cover (150) that concentrically surrounds the seal (250) and the shaft (45) so that a cavity (90) is defined between the seal cover (150) and the shaft (45), the seal cover (150) including a fluid passage (162) for introducing cleaning fluid into the cavity (90); **characterized by** a hub collar (200) that is arranged in the cavity (90) and that includes a side wall (205) with an inner surface (206) that faces toward and is radially spaced from the shaft (45) and an opposing outer surface (207) that faces away from the shaft (45) and is radially spaced from the seal cover (150), the side wall of the hub collar (200) including multiple bores (210) that extend through the inner and outer surfaces (206, 207) thereof, each of the multiple bores (210) extending angularly through the side wall (205) of the hub collar (200) for directing the cleaning fluid angularly toward the shaft (45) so as to establish a fluid flow path within the cavity (90) in which the cleaning fluid flows circumferentially around the shaft (45).

2. A seal assembly of claim 1, wherein the cavity (90) is adjacent the seal (250) so that the cleaning fluid introduced into the cavity (90) can disengage the seal from an outer circumferential surface (46) of the shaft (45) and flow past the seal (250) for purging the cavity (90) with the cleaning fluid.

3. A seal assembly of claim 1, the seal (250) further comprising a lip (265) that resiliently engages the shaft (45) so that cleaning fluid that is introduced into the cavity (90) can force the lip to disengage from the shaft (45) and allow the cleaning fluid to flow past the seal (250).

4. A seal assembly (100) of any of the proceeding claims wherein seal cover (150) houses a first seal (250) and a second seal (250) that are spaced from each other, (i) the first seal defining the seal past which the cleaning fluid can flow for purging the cavity (90) with the cleaning fluid (45), and (ii) the second seal remaining engaged with the outer circumferential surface (46) of the shaft while the cleaning fluid disengages the first seal (250) from the outer circumferential surface (46) of the shaft (45).

5. A seal assembly of claim 4, wherein the first and second seals (250) are longitudinally spaced from each other and are positioned on opposing sides of the cavity (90).

6. A seal assembly of claim 4 or claim 5, wherein the hub collar (200) is provided concentrically around the shaft (45) and in the cavity (90) between the first and second seal (250),

7. A food processing machine (5) having a wall (19) with a seal assembly (100) according to any of the proceeding claims mounted thereto and positioned so cleaning fluid that flows past the seal (250) of the seal assembly (100) for purging the cavity flows into the food processing machine.

8. A food processing machine (5) according to claim 7, further comprising a cleaning fluid supply line (168) delivering the cleaning fluid to the fluid passage (162) of the seal cover (150), the seal assembly (100) being mounted to the wall (19) of the food processing machine (5) so that a connection between the cleaning fluid supply line (168) and an inlet
of the fluid passage (162) is provided outside of the food processing machine (5).

9. A food processing machine (5) according to claim 7 or claim 8, wherein the seal assembly (100) is mounted to an outer surface of the wall (19) of the food processing machine (5), the seal assembly fluidly connecting to a port (21) that extends through the wall (19) of the food processing machine so that the cleaning fluid that flows past the seal (250) for purging the cavity (90) flows into the food processing machine (5).

10. A food processing machine (5) according to any of claims 7 to 9, wherein the cleaning fluid flows (i) circumferentially around the shaft (45), and (ii) out of the seal assembly (100) and into the food processing machine (5).

## Patentansprüche

1. Dichtungsanordnung (100) zur Verwendung in einem Reinigung-vor-Ort-System, Folgendes umfassend:
eine Dichtung (250), die konzentrisch um einen Schaft (45) herum passt und sich mit diesem verbindet:
ein Dichtungsdeckel (150), der konzentrisch die Dichtung (250) und den Schaft (45) umgibt, so dass sich ein Hohlraum (90) zwischen dem Dichtungsdeckel (150) und dem Schaft (45) definiert, wobei der Dichtungsdeckel (150) einen Flüssigkeitsdurchgang (162) für das Einführen von Reinigungsflüssigkeit in den Hohlraum (90) umfasst und **dadurch gekennzeichnet ist, dass** ein Nabenbund (200) in dem Hohlraum (90) angeordnet ist, die eine Seitenwand (205) mit einer Innenfläche (206) umfasst, die hin zum Schaft (45) ausgerichtet ist und vom Schaft radial beabstandet ist und einer gegenüberliegenden Außenfläche (207), die vom Schaft (45) weg ausgerichtet ist und vom Dichtungsdeckel (150) radial beabstandet ist, wobei die Seitenwand des Nabenbunds (200) mehrfache Bohrlöcher (210) aufweist, die sich durch die Innen- und Außenflächen (206, 207) erstrecken und wobei jedes der mehrfachen Bohrlöcher (210) sich eckig durch die Seitenwand (205) des Nabenbunds (200) erstreckt, um damit die Reinigungsflüssigkeit eckig zu dem Schaft (45) zu leiten, um damit eine Flüssigkeitspassage innerhalb des Hohlraums (90) zu schaffen, in der die Reinigungsflüssigkeit zirkumferenziell um den Schaft (45) fließen kann.

2. Dichtungsanordnung gemäß Anspruch 1, wobei der Hohlraum (90) sich angrenzend an die Dichtung (250) befindet, so dass die in den Hohlraum (90) eingeführte Reinigungsflüssigkeit die Dichtung von einer zirkumferenziellen Außenfläche (46) des Schafts (45) loslösen kann und durch die Dichtung (250) zur Reinigung des Hohlraums (90) mit der Reinigungsflüssigkeit fließen kann.

3. Dichtungsanordnung gemäß Anspruch 1, wobei die Dichtung (250) ferner einen Randabschluss (265) umfasst, der elastisch in den Schaft (45) eingreift, so dass die in den Hohlraum (90) eingeführte Reinigungsflüssigkeit den Randabschluss zur Loslösung vom Schaft (45) zwingt, und es der Reinigungsflüssigkeit möglich macht, durch die Dichtung (250) zu fließen.

4. Dichtungsanordnung (100) gemäß einem der vorherigen Ansprüche, wobei der Dichtungsdeckel (150) eine erste Dichtung (250) und eine zweite Dichtung (250) unterbringt, die voneinander beabstandet sind, (i) wobei die erste Dichtung die Dichtungspassage definiert, durch welche die Reinigungsflüssigkeit (45) zur Reinigung des Hohlraums (90) fließen kann und (ii) und die zweite Dichtung mit der zirkumferenziellen Außenfläche (46) des Schafts verbunden bleibt, während die Reinigungsflüssigkeit die erste Dichtung (250) von der zirkumferenziellen Außenfläche (46) des Schafts (45) löst.

5. Dichtungsanordnung gemäß Anspruch 4, wobei die erste Dichtung und die zweite Dichtung (250) längslaufend voneinander beabstandet sind und auf den gegenüberliegenden Seiten des Hohlraums (90) positioniert sind.

6. Dichtungsanordnung gemäß Anspruch 4 oder 5, wobei der Nabenbund (200) konzentrisch um den Schaft (45) und im Hohlraum (90) zwischen der ersten Dichtung und eine zweiten Dichtung (250) bereitgestellt wird.

7. Lebensmittelverarbeitungsmaschine (5), die eine Wand (19) mit einer Dichtungsanordnung (100) gemäß einem der vorherigen Ansprüche aufweist, welche an diese montiert ist und derart positioniert ist, so dass die Reinigungsflüssigkeit, die durch die Dichtung (250) der Dichtungsanordnung (100) zur Reinigung des Hohlraums fließt, in die Lebensmittelverarbeitungsmaschine fließt.

8. Lebensmittelverarbeitungsmaschine (5) gemäß Anspruch 7, weiter umfassend eine Reinigungsflüssigkeitsversorgungsleitung (168), die die Reinigungsflüssigkeit zum Flüssigkeitsdurchgang (162) des Dichtungsdeckels (150) liefert, wobei die Dichtungsanordnung (100) an die Wand (19) der Lebensmittelverarbeitungsmaschine (5) montiert ist, so dass eine Verbindung zwischen der Reinigungsflüssigkeitsversorgungsleitung (168) und einem Einlass des Flüssigkeitsdurchgangs (162) außerhalb der Lebensmittelverarbeitungsmaschine (5) bereitgestellt wird.

9. Lebensmittelverarbeitungsmaschine (5) gemäß Anspruch 7 oder 8, wobei die Dichtungsanordnung (100) an eine Außenfläche der Wand (19) der Lebensmittelverarbeitungsmaschine (5) montiert ist, wobei die Dichtungsanordnung einen Flüssigkeitseinlass mit einem Anschluss (21) ausweist, der sich durch die Wand (19) der Lebensmittelverarbeitungsmaschine erstreckt, so dass die Reinigungsflüssigkeit, die durch die Dichtung (250) zur Reinigung des Hohlraums (90) fließt, in die Lebensmittelverarbeitungsmaschine (5) fließt.

10. Lebensmittelverarbeitungsmaschine (5) gemäß Anspruch 7 bis 9, wobei die Reinigungsflüssigkeit (i) zirkumferenziell um den Schaft (45) fließt und (ii) aus der Dichtungsanordnung (100) heraus in die Lebensmittelverarbeitungsmaschine (5) fließt.

## Revendications

1. Ensemble étanche (100) utilisé avec un système de nettoyage sur place, comprenant :
un joint (250) qui s'adapte de manière concentrique autour d'un arbre (45) en s'y engageant ;
un couvercle étanche (150) qui entoure de manière concentrique le joint (250) et l'arbre (45), de sorte qu'une cavité (90) est définie entre le couvercle étanche (150) et l'arbre (45), le couvercle étanche (150) comprenant un passage pour fluide (162) permettant d'introduire du fluide de nettoyage dans la cavité (90) ; **caractérisé par** un collier de moyeu (200) qui est disposé dans la cavité (90) et qui comprend une paroi latérale (205) dotée d'une surface intérieure (206) qui fait face vers l'arbre (45) et qui en est radialement espacée, et une surface extérieure opposée (207) tournée à l'écart de l'arbre (45) et qui est radialement espacée du couvercle étanche (150), la paroi latérale du collier de moyeu (200) comprenant de multiples trous (210) qui s'étendent à travers les surfaces intérieure et extérieure (206, 207) de celle-ci, chacun des trous multiples (210) s'étendant de manière angulaire à travers la paroi latérale (205) du collier de moyeu (200) afin de diriger le fluide de nettoyage de manière angulaire vers l'arbre (45), de manière à établir une voie d'écoulement de fluide au sein de la cavité (90), dans lequel le fluide de nettoyage s'écoule circonférentiellement autour de l'arbre (45).

2. Ensemble étanche selon la revendication 1, dans lequel la cavité (90) est adjacente au joint (250), de sorte que le fluide de nettoyage introduit dans la cavité (90) peut se dégager du joint à partir d'une autre surface circonférentielle (46) de l'arbre (45) et s'écouler au-delà du joint (250) afin de purger la cavité (90) par le fluide de nettoyage.

3. Ensemble étanche selon la revendication 1, le joint (250) comprenant en outre une lèvre (265) qui entre en contact de manière résiliente avec l'arbre (45), de sorte que le fluide de nettoyage qui est introduit dans la cavité (90) peut forcer la lèvre à se dégager de l'arbre (45) en permettant au fluide de nettoyage de s'écouler au-delà du joint (250).

4. Ensemble étanche (100) selon l'une quelconque des revendication précédentes, dans lequel le couvercle étanche (150) loge un premier joint (250) et un deuxième joint (250) qui sont espacés l'un de l'autre, (i) le premier joint définissant le joint au-delà duquel le fluide de nettoyage peut s'écouler pour purger la cavité (90) avec le fluide de nettoyage (45), et (ii) le deuxième joint restant en contact avec la surface circonférentielle externe (46) de l'arbre alors que le fluide de nettoyage quitte le premier joint (250) à partir de la surface circonférentielle externe (46) de l'arbre (45).

5. Ensemble étanche selon la revendication 4, dans lequel les premier et deuxième joints (250) sont longitudinalement espacés l'un de l'autre et sont positionnés sur des côtés opposés de la cavité (90).

6. Ensemble étanche selon la revendication 4 ou la revendication 5, dans lequel le collier de moyeu (200) est placé de manière concentrique autour de l'arbre (45) et dans la cavité (90) située entre les premier et deuxième joints (250).

7. Machine (5) de traitement d'aliments comportant une paroi (19) dotée d'un ensemble étanche (100) selon l'une quelconque des revendications précédentes, qui y est monté et positionné de manière que le fluide de nettoyage qui s'écoule au-delà du joint (250) de l'ensemble étanche (100) pour purger la cavité s'écoule dans la machine de traitement d'aliments.

8. Machine (5) de traitement d'aliments selon la revendication 7, comprenant en outre une conduite d'alimentation en fluide (168) conduisant le fluide de nettoyage jusqu'au passage pour fluide (162) du couvercle étanche (150), l'ensemble étanche (100) étant monté à la paroi (19) de la machine (5) de traitement d'aliments, si bien qu'une connexion entre la conduite d'alimentation en fluide (168) et une entrée du passage pour fluide (162) est prévue en dehors de la machine (5) de traitement d'aliments.

9. Machine (5) de traitement d'aliments selon la revendication 7 ou la revendication 8, dans laquelle l'ensemble étanche (100) est monté à une surface externe de la paroi (19) de la machine (5) de traitement d'aliments, l'ensemble étanche se connectant pour le fluide à un orifice (21) qui s'étend à travers la paroi (19) de la machine de traitement d'aliments de sorte que le fluide de nettoyage qui s'écoule au-delà du joint (250) pour purger la cavité (90) s'écoule dans la machine (5) de traitement d'aliments.

10. Machine (5) de traitement d'aliments selon l'une quelconque des revendications 7 à 9, dans laquelle le fluide de nettoyage s'écoule (i) circonférentiellement autour de l'arbre (45) et (ii) en dehors de l'ensemble étanche (100) et jusqu'à la machine (5) de traitement d'aliments.
